# EUROPEAN PATENT SPECIFICATION

(11) **EP 4 113 265 B1**
(45) Date of publication and mention of the grant of the patent: **24.09.2025**
(21) Application number: 22167799.0
(22) Date of filing: 31.12.2014
(51) Int. Cl.: G06F 3/04842, G06F 3/04817, G06F 3/04883

(54) **DEVICE, METHOD AND GRAPHIC USER INTERFACE USED TO MOVE APPLICATION INTERFACE ELEMENT**
VORRICHTUNG, VERFAHREN UND GRAPHISCHE BENUTZERSCHNITTSTELLE ZUM BEWEGEN VON ANWENDUNGSSCHNITTSTELLENELEMENTEN
DISPOSITIF, PROCÉDÉ ET INTERFACE UTILISATEUR GRAPHIQUE UTILISÉS POUR DÉPLACER UN ÉLÉMENT D'INTERFACE D'APPLICATION

(43) Date of publication of application: 04.01.2023
(62) Divisional of application: 14909484.9
(73) Proprietor: Beijing Kunshi Intellectual Property Management Co., Ltd., Beijing (CN)
(72) Inventor: LI, Xiaojuan, Shenzhen, 518129 (CN); GAO, Wenmei, Shenzhen, 518129 (CN); WANG, Yahui, Shenzhen, 518129 (CN); QIN, Chao, Shenzhen, 518129 (CN); QIAN, Kai, Shenzhen, 518129 (CN)
(74) Representative: Novagraaf International SA

(56) References cited:
- CN-A- 102 510 420
- CN-A- 104 063 129
- US-A1- 2012 096 400
- MYLEARNINGLAB: "Learn Windows 7 - Moving Files and Folders", 15 October 2012 (2012-10-15), XP093148319, Retrieved from the Internet <URL:https://www.youtube.com/watch?v=BB7Tub2EheU> [retrieved on 20240405]

## Description

### TECHNICAL FIELD

This specification relates to an electronic device with a touch-sensitive surface (touch-sensitive surface), including but not limited to an electronic device with a touch-sensitive surface, a method and a graphic user interface that are used to move an application interface element (application interface element).

### BACKGROUND

In recent years, use of a portable device with a touch-sensitive surface increases significantly. Such a portable device already dramatically increases a quantity of applications or "APPs". For example, an image and video camera application provides a user with a content generation opportunity such as photo taking or video recording. A memo application allows a user to read or write a memo. On a graphic user interface of the portable device, an application corresponds to an application interface element. Sometimes such an application interface element is also referred to as an application icon (app icon), an application shortcut (app shortcut), an application button (app button), an application widget (app widget), or the like. With increase of a quantity of applications, that the applications can be quickly found and used by the user is essential for the portable device to quickly respond to a user operation.

CN102510420A discloses a method for quickly performing unified operation on multiple desktop elements in a mobile terminal, which comprises the following steps: in response to a specific gesture selection for a desktop element to be operated, identifying attributes of the desktop element to be operated; positioning all the desktop elements to be operated with the same attributes; and performing unified operation on all the desktop elements to be operated with the same attributes.

CN104063129A discloses an application tool classification method which comprises the following steps: the mobile terminal detects a first gesture operated when a user selects a first application tool in a graphical user interface of the mobile terminal; when an operation instruction corresponding to the first gesture is an application classification instruction, the mobile terminal enters an application tool management interface according to the application classification instruction, and in addition, a second application tool identical to the first application tool type and the first application tool are simultaneously added into a classification file folder.

### SUMMARY

The invention is defined by the appended claims. Therefore, an electronic device needs to have a faster and more efficient method and interface to respond to management performed by a user on an application interface element.

Such a method and interface can supplement or replace a conventional method for managing application interface elements. Such a method and interface can respond to a personalized requirement of the user more quickly and more intelligently, help the user spend less time achieving a basically same effect of managing the application interface elements, and generate a more efficient man-machine interface. For a device driven by a battery, such a method and interface can save electric power, and can prolong battery charging interval.

Some embodiments in this specification provide such a method and interface by using a disclosed device. In some embodiments, the device is a desktop computer. In some embodiments, the device is portable (for example, a notebook computer, a tablet, a handheld device, or a wearable device). In some embodiments, the device has a touchpad. In some embodiments, the device has a touch-sensitive display (also referred to as a "touchscreen", a "touchscreen display", or a "display with a touch-sensitive surface"). In some embodiments, the device has a graphic user interface (GUI), one or more processors, a memory, and one or more modules stored in the memory for executing multiple functions, a program, or an instruction set. In some embodiments, the user mainly interacts with the GUI by means of a finger contact and/or a gesture on the touch-sensitive surface. In some embodiments, such functions may include image editing, drawing, presence, word processing, webpage creation, disk editing, spreadsheet making, game playing, call making, video conference, email receiving and sending, instant messaging, exercise support, digital photographing, digital video recording, web browsing, digital music playing, and/or digital video playing. An executable instruction used to execute such functions may be included in a non-transient computer-readable storage medium or another computer program product that is configured to be executed by one or more processors.

Based on the foregoing technical solutions, the electronic device provides the user with more friendly methods and user interfaces, and implements the function of automatically gathering application icons of a same type. In addition, the device provides the user with more personalized choices, for example, allowing only some application icons to respond to the gesture of the user; or allowing the user to increase or decrease movable icons, and then automatically gathering the icons. For a device driven by a battery, such a method and interface can save electric power, and can prolong battery charging interval.

### BRIEF DESCRIPTION OF DRAWINGS

For a better understanding of the foregoing embodiments of the present invention and additional embodiments of the present invention, reference should be made to the following accompanying drawings and the following embodiment description. In the accompanying drawings, a same reference numeral in all accompanying drawings denotes a corresponding component.
FIG. 1A-a and FIG. 1A-b show a block diagram of a portable electronic device with a touch-sensitive display according to some embodiments;
FIG. 1B shows a block diagram of an exemplary component used for event handling according to some embodiments;
FIG. 2 shows a portable electronic device with a touchscreen according to some embodiments;
FIG. 3 is a block diagram of an exemplary electronic device with a display and a touch-sensitive surface according to some embodiments;
FIG. 4 shows an exemplary user interface used for an application menu on a portable electronic device according to some embodiments;
FIGs. 5A-5G show an exemplary user interface used to move an application interface element according to some embodiments and further unclaimed aspects of the present disclosure;
FIG. 6 shows a flowchart of a method for moving an application interface element according to some unclaimed aspects of the present disclosure; and
FIG. 7 shows a functional block diagram of an electronic device according to some embodiments.

### DESCRIPTION OF EMBODIMENTS

Generally, when managing multiple application interface elements, a user uses a folder on a graphic user interface. The user may manually move the multiple application interface elements one by one, for example, move them into a folder. When a quantity of application interface elements on the graphic user interface is large, the manual gathering operation is repeated many times, which consumes much electric power and leads to poor user experience.

The embodiments described below help a user gather application interface elements on a graphic user interface by performing a small quantity of operations, reduce manual operations of the user, save electric power, and enhance user experience.

In some embodiments, when a user gesture is actuated on an area (for example, a location on a touch-sensitive surface of a device) of an application interface element a (for example, an app icon) on a graphic user interface, the application interface element a enters a movable state, and the application interface element a corresponds to an application A. When another gesture is actuated on the area of the application interface element a or another area of the graphic user interface, a new folder C is displayed on the graphic user interface. In addition, the application interface element a and an application interface element b corresponding to an application B that is of a same type as the application A are automatically moved into the folder C. In this way, the application interface elements a and b are automatically gathered into the same folder C. In some embodiments, when the user gesture is actuated on a graphic user interface, one or more application interface elements may be selected for being movable, and one or more movable application interface elements may be deselected for being unmovable.

In some embodiments, when the user gesture is actuated on an area of an application interface element a (for example, an app icon) on a graphic user interface or another area (for example, an area of an existing folder C) of the graphic user interface, the application interface element a enters a movable state, and the application interface element a corresponds to an application A. When another gesture is actuated on the application interface element a or another area of the graphic user interface, the application interface element a and an application interface element b corresponding to an application B that is of a same type as the application A are automatically moved into the existing folder C on the graphic user interface. In this way, the application interface elements a and b are automatically gathered into the same folder C. In some embodiments, when the user gesture is actuated on a graphic user interface, one or more application interface elements may be selected for being movable, and one or more movable application interface elements may be deselected for being unmovable.

In some embodiments, when the user gesture is actuated on a graphic user interface, the multiple events described above may be triggered. For example, the multiple application interface elements are movable, and the multiple application interface elements are automatically gathered into a same folder. In some embodiments, multiple events are triggered successively according to time of actuating the user gesture on a touch-sensitive surface. For example, when the time of actuating the user gesture on the touch-sensitive surface reaches T1, multiple application interface elements are movable; and when the gesture continues being actuated on the touch-sensitive surface and the time of the continued actuation reaches T2, the multiple application interface elements are automatically gathered into a same folder, where T2>T1.

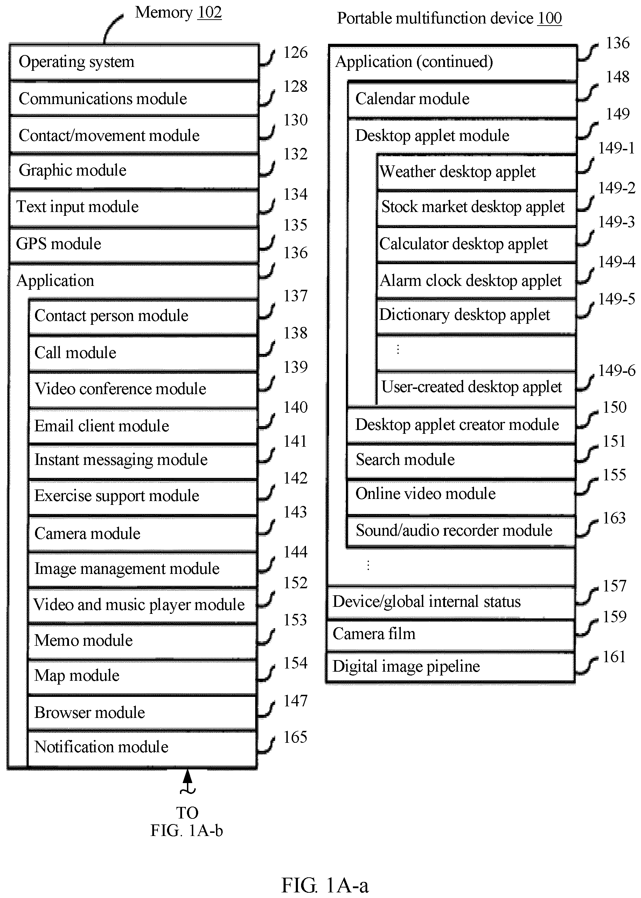

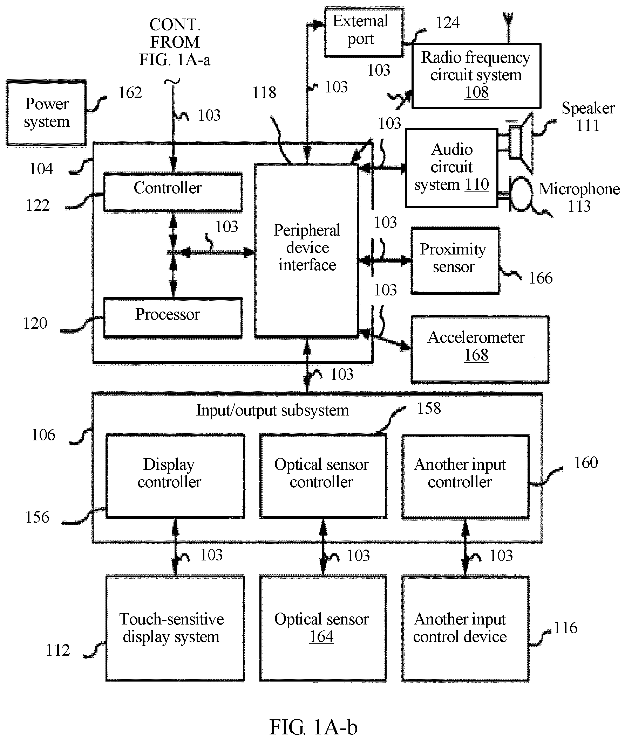

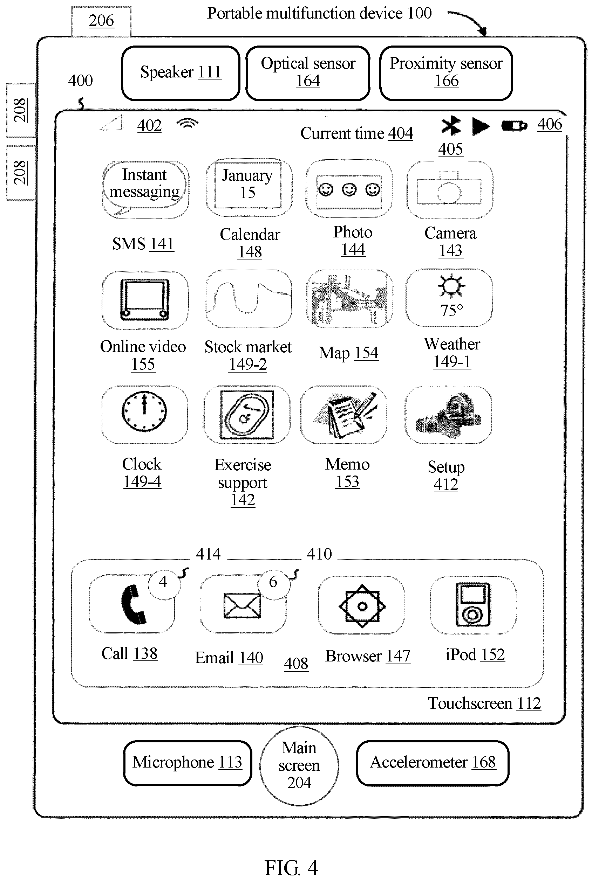

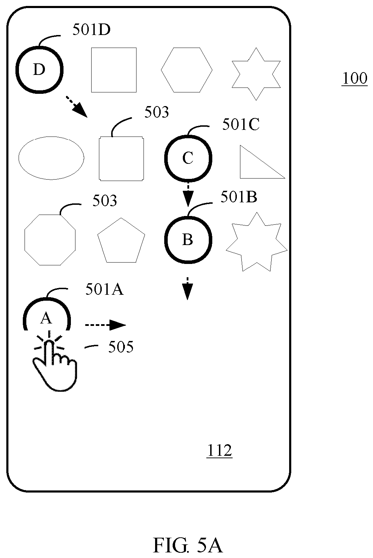

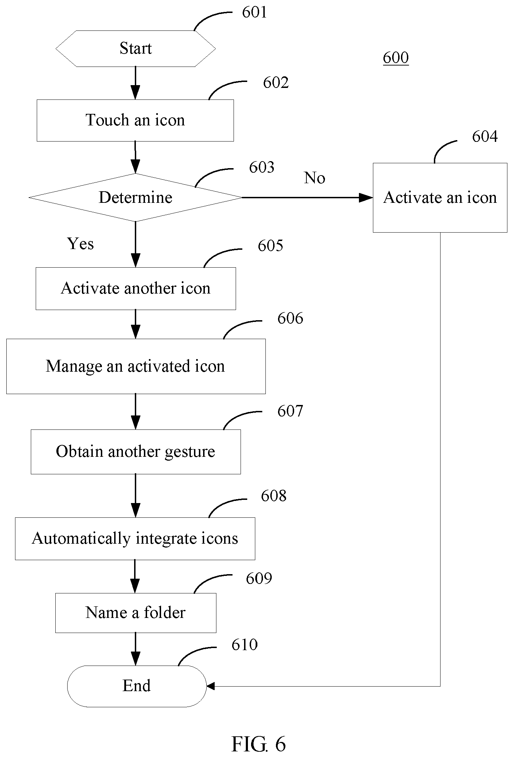

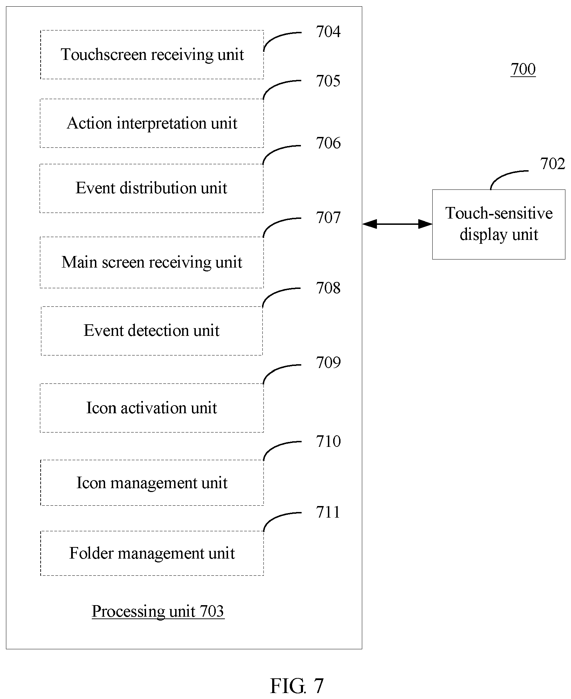

In the following, FIGs. 1A-1B, FIG. 2, and FIG. 3 illustrate an exemplary device. FIG. 4 and FIGs. 5A-5G show an exemplary user interface used to move an application interface element. FIG. 6 shows a flowchart of a method for moving an application interface element. FIG. 7 shows a functional block diagram used to move an application interface element. User interfaces in FIGs. 5A-5G are used to expound a process and/or a function in FIG. 6 and FIG. 7.

### Exemplary Device

Now the embodiments are referenced in detail, and examples of the embodiments are shown in accompanying drawings. Many specific details are given in the following detailed description for thorough understanding of the present invention. However, apparently a person skilled in the art understands that the present invention can be practiced without the specific details. In another case, detailed descriptions of a well-known method, process, component, circuit, and network are omitted to avoid unnecessary ambiguity of an aspect of the embodiments.

Also understandably, although the terms such as "first" and "second" in this specification may be used to describe various elements, but the elements shall not be limited by the terms. The terms are merely used to distinguish one element from another. For example, a first contact may be named a second contact, and similarly, a second contact may be named a first contact, without departing from the scope of the present invention, which is defined by the appended claims. Both a first contact and a second contact are contacts, but they may be not a same contact, and in some scenarios, may be a same contact.

In this specification, the terms used in the description of the present invention intend to describe a specific embodiment rather than limit the present invention. Just as used in the specification and the appended claims of the present invention, a singular expression "one", "a" or "this" is intended to include a plural expression thereof unless otherwise specified in the context. Also understandably, the term "and/or" used in this specification refers to and covers any combination and all possible combinations of one or more items in the items listed associatively. Also understandably, the terms "include" and/or "comprise" used in the specification refer to existence of mentioned characteristics, integers, steps, operations, elements, and/or components, but do not exclude existence or addition of one or more other characteristics, integers, steps, operations, elements, components, and/or a group thereof.

Depending on the context, the term "if" used in this specification may be construed as "when..." or "after..." or "in response to determining" or "in response to detecting". Similarly, depending on the context, the expression "if determining..." or "if detecting [the mentioned condition or event]" may be construed as "when determining..." or "in response to determining..." or "when detecting [the mentioned condition or event]" or "in response to detecting [the mentioned condition or event]".

Embodiments of an electronic device, a user interface applied to such a device, and an associated process that uses such a device are described. In some embodiments, the device is a portable communications device that further includes another function such as a personal digital assistant and/or a music player function, for example, a mobile phone. Exemplary embodiments of a portable electronic device include but are not limited to a portable electronic device on which an iOS^{®}, Android^{®}, or Microsoft^{®} operating system or another operating system is installed. Another portable electronic device may also be used, for example, a laptop computer or tablet with a touch-sensitive surface (such as a touchscreen display and/or a touchpad). Also understandably, in some embodiments, the device is not a portable communications device, but is a desktop computer with a touch-sensitive surface (such as a touchscreen display and/or a touchpad).

In the following discussion, an electronic device that includes a display and a touch-sensitive surface is described. However, it should be understood that the electronic device may include one or more other physical user interface devices such as a physical keyboard, a mouse, and/or a joystick.

A device generally supports multiple applications such as one or more of the following: a drawing application, a presence application, a word processing application, a web creation application, a disk editing application, a spreadsheet application, a game application, a call application, a video conference application, an email application, an instant messaging application, an exercise support application, a photo management application, a digital camera application, a digital video camera application, a web browsing application, a digital music player application, and/or a digital video player application.

Various applications that can be executed on the device may share at least one physical user interface device such as a touch-sensitive surface. One or more functions of the touch-sensitive surface and corresponding information displayed on the device may be adjusted and/or changed to a next application, and/or, adjusted and/or changed within the corresponding application. In this way, a shared physical architecture (such as a touch-sensitive surface) of the device can support various applications by using a user interface that is intuitive and clear to the user.

Now attention is paid to an embodiment of a portable device with a touch-sensitive display. FIG. 1A-a and FIG. 1A-b show a block diagram of a portable electronic device 100 with a touch-sensitive display 112 according to some embodiments. For convenience, the touch-sensitive display 112 is sometimes referred to as a "touchscreen", and may also be referred to as or known as a touch-sensitive display system, or may be referred to as a display system with a touch-sensitive surface (touch-sensitive surface) and a screen (display). The device 100 may include a memory 102 (which may include one or more computer-readable storage mediums), a memory controller 122, one or more processing units (CPU) 120, a peripheral device interface 118, an RF circuit system 108, an audio circuit system 110, a speaker 111, a microphone 113, an input/output (I/O) subsystem 106, another input control device 116, and an external port 124. The device 100 may include one or more optical sensors 164. Such components may communicate by using one or more communications buses or signal cables 103.

It should be understood that the device 100 is merely an example of a portable electronic device, and the device 100 may have more or fewer components than those shown, may combine two or more components, or may have different configurations or layouts of the components. Various components shown in FIG. 1A-a and FIG. 1A-b may be implemented by hardware, software, or a combination of hardware and software, including one or more signal processing and/or dedicated integrated circuits.

The memory 102 may include a high-speed random access memory, and may further include a non-volatile memory such as one or more disk storage devices, flash memory devices, or other non-volatile solid-state storage devices. Other components (such as a CPU 120 and a peripheral device interface 118) of the device 100 may access the memory 102 under control of the memory controller 122.

The peripheral device interface 118 may be used to couple an input and output peripheral device of the device to the CPU 120 and the memory 102. The one or more processors 120 run or execute various software programs and/or instruction sets stored in the memory 102, so as to execute various functions of the device 100 and process data. In some embodiments, the one or more processors 120 include an image signal processor and a dual-core or multi-core processor.

In some embodiments, the peripheral device interface 118, the CPU 120, and the memory controller 122 may be implemented on a single chip such as a chip 104. In some other embodiments, they may be implemented on an independent chip.

The RF (radio frequency) circuit system 108 receives and sends an RF signal, which is also referred to as an electromagnetic signal. The RF circuit system 108 converts an electric signal into an electromagnetic signal/converts an electromagnetic signal into an electric signal, and communicates with a communications network and another communications device by using the electromagnetic signal. The RF circuit system 108 may include a well-known circuit system configured to execute such functions, including but not limited to an antenna system, an RF transceiver, one or more amplifiers, a tuner, one or more oscillators, a digital signal processor, a codec chipset, a subscriber identity module (SIM) card, a memory, and the like. The RF circuit system 108 may communicate with a network and another device by means of wireless communication, where the network is, for example, the Internet (also referred to as World Wide Web (WWW)), an intranet, and/or a wireless network (such as a cellular network, a wireless local area network (LAN), and/or a metropolitan area network (MAN)). The wireless communication may use any type of multiple communications standards, protocols, and technologies, including but not limited to a Global System for Mobile telecommunications (GSM), an Enhanced Data GSM Environment (EDGE), High Speed Downlink Packet Access (HSDPA), High Speed Uplink Packet Access (HSUPA), Wideband Code Division Multiple Access (W-CDMA), Code Division Multiple Access (CDMA), Time Division Multiple Access (TDMA), Bluetooth, Wireless Fidelity (WI-Fi) (for example, IEEE 802.11a, IEEE 802.11b, IEEE 802.11g and/or IEEE 802.11n), Voice Over Internet Protocol (VoIP), Wi-MAX, an email protocol (for example, Internet Message Access Protocol (IMAP) and/or Post Office Protocol (POP)), instant messaging (for example, Extensible Messaging and Presence Protocol (XMPP), SIP for Instant Messaging and Presence Leveraging Extension (SIMPLE), Instant Messaging and Presence Service (IMPS)), and/or Short Message Service (SMS), or any other appropriate communications protocols including a communications protocol that has not been developed at the date of submitting this document.

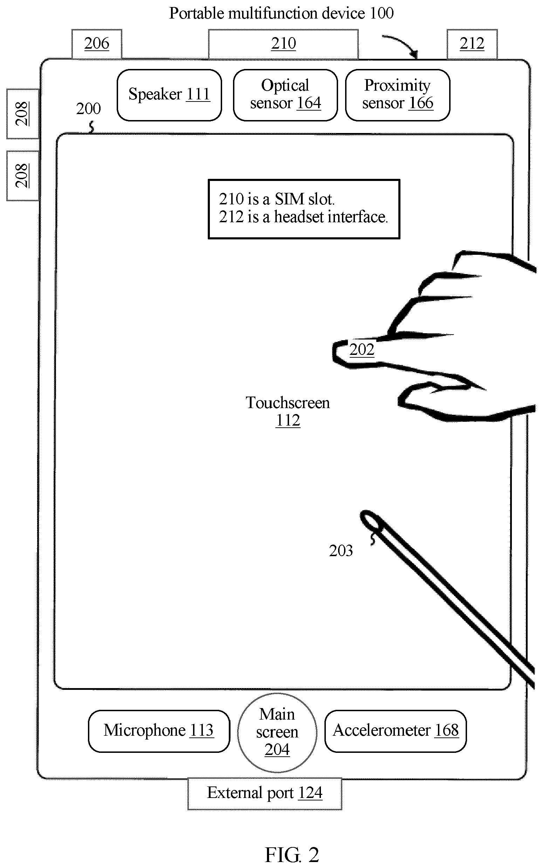

The audio circuit system 110, the speaker 111, and the microphone 113 provide an audio interface between the user and the device 100. The audio circuit system 110 receives audio data from the peripheral device interface 118, converts the audio data into an electric signal, and transmits the electric signal to the speaker 111. The speaker 111 converts the electric signal into a sound wave audible to a person. The audio circuit system 110 further receives the electric signal that is converted from the sound wave by the microphone 113. The audio circuit system 110 converts the electric signal into audio data, and transmits the audio data to the peripheral device interface 118 for processing. The audio data may be retrieved by the peripheral device interface 118 from, and/or transmitted by the peripheral device interface 118 to, the memory 102 and/or the RF circuit system 108. In some embodiments, the audio circuit system 110 further includes a headset jack (for example, 212 in FIG. 2). The headset jack provides an interface between the audio circuit system 110 and a removable audio input/output peripheral device, where the peripheral device is, for example, an earphone with only an output, or a headset with both an output (such as a single-earpiece earphone or a double-earpiece earphone) and an input (such as a microphone).

The I/O subsystem 106 couples the input/output peripheral device on the device 100, such as the touchscreen 112 and the another input control device 116, to the peripheral device interface 118. The I/O subsystem 106 may include a display controller 156 and one or more input controllers 160 applied to another input control device. The one or more input controllers 160 receive an electric signal from the another input control device 116, or send an electric signal to another input control device 116. The other input control device 116 may include a physical button (such as a push button, and a rocker button), a dial pad, a slider switch, a joystick, a click wheel, and the like. In some alternative embodiments, the input controller 160 may be coupled to (or not coupled to) any one of the following: a keyboard, an infrared port, a USB port, or a pointer device such as a mouse. The one or more buttons (for example, 208 in FIG. 2) may include an up/down button that is used to control a volume of the speaker 111 and/or the microphone 113. The one or more buttons may include a push button (for example, 206 in FIG. 2).

The touch-sensitive display 112 provides an input interface and an output interface between the device and the user. The display controller 156 receives an electric signal from the touchscreen 112 and/or sends the electric signal to the touchscreen 112. The touchscreen 112 displays a visual output to the user. The visual output may include a graph, a text, an icon, a video, and any combination thereof (collectively referred to as a "graph"). In some embodiments, some visual outputs or all visual outputs may correspond to user interface objects.

The touchscreen 112 has a touch-sensitive surface, a sensor, or a sensor group that receives an input from the user based on tactility and/or a tactile contact. The touchscreen 112 and the display controller 156 (together with any associated module and/or instruction set in the memory 102) detect a contact on the touchscreen 112 (and any movement or interruption of the contact), and convert the detected contact into interaction with a user interface object (for example, one or more soft keys, icons, web pages or images) displayed on the touchscreen 112. In an exemplary embodiment, a contact point between the touchscreen 112 and the user corresponds to a finger of the user.

The touchscreen 112 may use an LCD (liquid crystal display) technology, an LPD (light emitting polymer display) technology, or an LED (light emitting diode) technology, and may use another display technology in another embodiment. The touchscreen 112 and the display controller 156 may detect a contact and any movement or interruption thereof by using any one of multiple touch sensing technologies that are currently known or to be developed in the future and using another proximity sensor arras, or by using another component used to determine one or more points of contacting the touchscreen 112. The multiple touch sensing technologies include but are not limited to a capacitance technology, a resistance technology, an infrared technology, and a surface acoustic wave technology. In an exemplary embodiment, a projected mutual-capacitance sensing technology is used.

The touchscreen 112 may have a video resolution higher than 100dpi. In some embodiments, the touchscreen has a video resolution of about 160dpi. The user may use any appropriate object or accessory such as a stylus or a finger to contact the touchscreen 112. In some embodiments, a user interface is designed to mainly work together with a finger-based contact and gesture. Compared with a stylus-based input, a finger may have a lower accuracy due to a larger contact area on the touchscreen. In some embodiments, the device translates a finger-based rough input into an accurate pointer/cursor location or command to execute an action expected by the user.

In some embodiments, in addition to the touchscreen, the device 100 may include a touchpad (not shown) configured to activate or deactivate a specific function. In some embodiments, the touchpad is a touch-sensitive area of the device, and the touch-sensitive area is different from the touchscreen and does not display the visual output. The touchpad may be a touch-sensitive surface separated from the touchscreen 112, or an extension part of the touch-sensitive surface formed by the touchscreen.

The device 100 further includes a power system 162 configured to supply power to various components. The power system 162 may include a power management system, one or more power supplies (for example, a battery, alternate current (AC)), a recharging system, a power failure detection circuit, a power converter or inverter, and a power status indicator (for example, a light emitting diode (LED)), and any other components associated with generation, management, and distribution of power in the portable device.

The device 100 may further include one or more optical sensors 164. FIG. 1A-a and FIG. 1A-b show an optical sensor coupled to an optical sensor controller 158 in an I/O subsystem 106. The optical sensor 164 may include a charge coupling device (CCD) or a complementary metal oxide semiconductor (CMOS) phototransistor. The optical sensor 164 receives, from an environment, light projected through one or more lens, and converts the light into data that represents an image. In combination with an imaging module 143 (also referred to as a camera module), the optical sensor 164 may capture a still image or video. In some embodiments, one or more optical sensors are located at the back of the device 100 and opposite to the touchscreen display 112 at the front of the device, so that the touchscreen display can be used as a viewfinder for collecting a still image and/or a video image. In some embodiments, another one or more optical sensors are located at the front of the device, and therefore when a user watches another video conference attendee on the touchscreen display, an image of the user can be obtained for use in the video conference.

The device 100 may further include one or more proximity sensors 166. FIG. 1A-a and FIG. 1A-b show a proximity sensor 166 coupled to the peripheral device interface 118. Alternatively, the proximity sensor 166 may be coupled to the input controller 160 in the I/O subsystem 106. In some embodiments, when the electronic device is placed near an ear of the user (for example, when the user is making a call), the proximity sensor turns off and disables the touchscreen 112.

The device 100 may further include one or more accelerometers 168. FIG. 1A-a and FIG. 1A-b show an accelerometer 168 coupled to the peripheral device interface 118. Alternatively, the accelerometer 168 may be coupled to the input controller 160 in the I/O subsystem 106. In some embodiments, information is displayed as a portrait view or a landscape view on the touchscreen display based on analysis on data received from the one or more accelerometers. Optionally, in addition to the accelerometer 168, the device 100 may include a magnetometer (not shown) and a GPS (or GLONASS, BeiDou Navigation Satellite System, or another global navigation systems) receiver (not shown), which is configured to obtain location and orientation (such as portrait or landscape) information of the device 100.

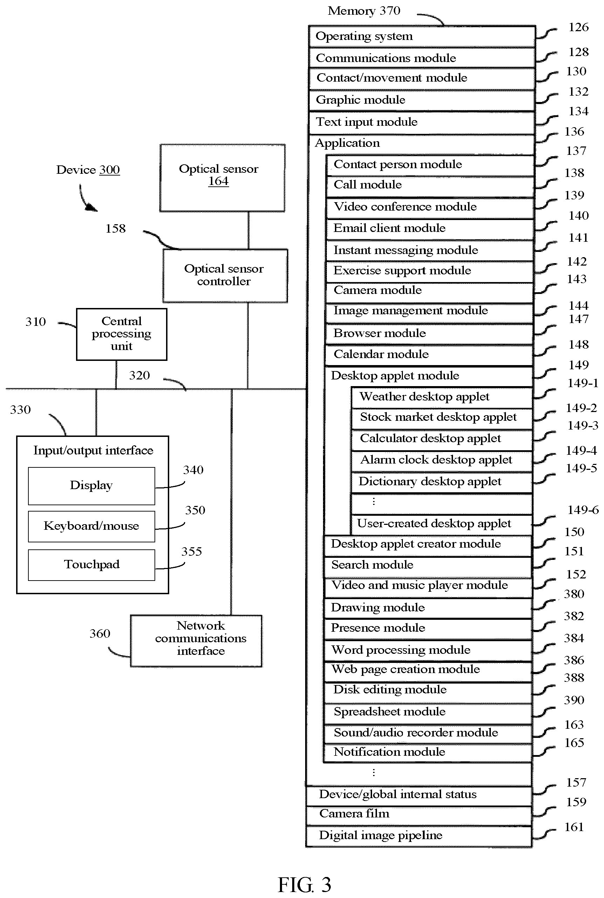

In some embodiments, software components stored in the memory 102 include an operating system 126, a communications module (or an instruction set) 128, a contact/movement module (or an instruction set) 130, a graphic module (or an instruction set) 132, a text input module (or an instruction set) 134, a Global Positioning System (GPS) module (or an instruction set) 135, and an application (or an instruction set) 136. In addition, in some embodiments, the memory 102 stores device/global internal statuses 157, as shown in FIG. 1A-a, FIG. 1A-b and FIG. 3. The device/global internal statuses 157 include one or more of the following: an active application status, which is used to indicate which applications (if any) are currently active; a display status, which is used to indicate which applications, views or other information occupy areas of the touchscreen display 112; a sensor status, including information obtained from each sensor of the device and the input control device 116; or location information related to the location and the posture of the device.

The operating system 126 (for example, Darwin, RTXC, Linux, Unix, OS X, Windows, Android or an embedded operating system (such as VxWorks)) includes various software components and/or drivers that are configured to control and manage general system tasks (for example, memory management, storage device control, and power management), and is conducive to communication between hardware and software components. In addition, in some embodiments, the memory 102 stores digital camera films 159 and digital image pipelines 161.

The communications module 128 is conducive to communicating with another device by using one or more external ports 124, and further includes various software components configured to process data received by the RF circuit system 108 and/or the external port 124. The external port 124 (for example, universal serial bus (USB) or FireWire) is suitable for coupling to another device directly, or indirectly by using a network (for example, the Internet or a wireless LAN). In some embodiments, the external port is the same as or similar to a 30-pin connector used on an iPod (a trademark of Apple Inc.) device, and/or is a multi-pin (for example, 30-pin) connector that is compatible with the 30-pin connector.

The contact/movement module 130 can detect a contact with the touchscreen 112 (in combination with the display controller 156) and another touch-sensitive device (for example, a touchpad or a physical click wheel). The contact/movement module 130 includes multiple software components configured to execute various operations related to contact detection, for example, determining whether a contact already occurs (for example, detecting a finger press event), determining whether a contact movement exists and tracking the movement on an entire touch-sensitive surface (for example, detecting a drag event of one or more fingers), and determining whether the contact is already ended (for example, detecting a finger raising event or a contact interruption). The contact/movement module 130 receives contact data from the touch-sensitive surface. Determining the movement of a contact point may include: determining a rate (a quantity value) at the contact point, a speed (a quantity value and a direction), and/or an acceleration (a change of a quantity value and/or a direction). The movement of the contact point is represented by a series of contact data. Such operations may be applied to a single-point contact (for example, a contact with one finger) or multi-point contact (for example, "multi-point touch"/a contact with multiple fingers). In some embodiments, the contact/movement module 130 and the display controller 156 detect the contact on the touchpad.

The contact/movement module 130 may detect a gesture input of the user. Different gestures on the touch-sensitive surface have different contact patterns. Therefore, a gesture may be detected by detecting a specific contact pattern. For example, detecting a single-finger tap gesture includes: detecting a finger press event, and then detecting a finger raising (lift-up) event at the same location as the finger press event (or at basically the same location) (for example, at a location of an icon). For another example, detecting a finger sweep gesture on the touch-sensitive surface includes: detecting a finger press event, and then detecting one or more finger drag events, and then detecting a finger raising (lift-up) event.

The graphic module 132 includes multiple known software components configured to render and display a graph on the touchscreen 112 or another display, including a component configured to change intensity of a displayed graph. The term "graph" used in this specification includes any object displayable to the user, including but not limited to a text, a web page, an icon (for example, a user interface object that includes a soft key), a digital image, a video, and an animation.

In some embodiments, the graphic module 132 stores a to-be-used data for representing a graph. A corresponding code may be allocated to each graphic. The graphic module 132 receives, from an application or the like, one or more codes of a graph specified to be displayed, and when necessary, receives coordinate data and other graphic attribute data together, and then generates screen image data and outputs the screen image data to the display controller 156.

The text input module 134 that may serve as a component of the graphic module 132 provides a soft key that is configured to input a text into multiple applications (for example, contact person 137, email 140, instant messaging 141, browser 147, and any other applications that require text input).

The GPS module 135 determines a location of a device, and provides information about the location so that the information is usable in various applications (for example, provides the information for a call 138 to perform location-based dialing, provides the information for a camera 143 as image/video metadata, and provides the information for an application of a location-based service such as a weather desktop applet, a local yellow page desktop applet, and a map/navigation desktop applet).

The application 136 may include the following modules (or instruction sets) or a subset or superset thereof:
contact person module 137 (sometimes referred to as an address book or a contact person list);
call module 138;
video conference module 139;
email client module 140;
instant messaging (IM) module 141;
exercise support module 142;
camera module 143 for a still image and/or a video image;
image management module 144;
browser module 147;
calendar module 148;
desktop applet module 149, which may include one or more of the following: a weather desktop applet 149-1, a stock market desktop applet 149-2, a calculator desktop applet 149-3, an alarm clock desktop applet 149-4, a dictionary desktop applet 149-5, another desktop applet obtained by the user, or a desktop applet 149-6 created by the user;
desktop applet creator module 150 used to generate a user-created desktop applet 149-6;
search module 151;
video and music player module 152, which may be formed by a video player module and a music player module;
memo module 153;
map module 154;
online video module 155;
sound/audio recorder module 163; and/or
notification module 165.

Examples of the another application 136 that may be stored in the memory 102 include another word processing application, another image editing application, a drawing application, a presence application, a Java-enabled application, an encryption application, a digital rights management application, a sound recognition application, and a sound reproduction application.

In combination with the touchscreen 112, the display controller 156, a contact module 130, the graphic module 132, and the text input module 134, the contact person module 137 may be configured to manage an address book or a contact person list (for example, stored in the application internal status 192 of the contact person module 137 in the memory 102 or the memory 370), including: adding a name to the address book; deleting a name from the address book; associating a phone number, an email address, an actual address or other information with a name; associating an image with a name; classifying and sorting names; and providing a phone number or an email address to initiate and/or facilitate communication performed by using a call 138, a video conference 139, an email 140, an IM 141, or the like.

In combination with the RF circuit system 108, the audio circuit system 110, the speaker 111, the microphone 113, the touchscreen 112, the display controller 156, the contact module 130, the graphic module 132, and the text input module 134, the call module 138 may be configured to input a character sequence corresponding to a phone number, access one or more phone numbers in the address book 137, modify an input phone number, dial a corresponding phone number, perform a conversation, and disconnect or hang up a call when the conversation is completed. As mentioned above, wireless communication may use any one of multiple communications standards, protocols, and technologies.

In combination with the RF circuit system 108, the audio circuit system 110, the speaker 111, the microphone 113, the touchscreen 112, the display controller 156, the optical sensor 164, the optical sensor controller 158, the contact module 130, the graphic module 132, the text input module 134, the contact person list 137, and the call module 138, the video conference module 139 includes an executable instruction that is used to initiate, perform, and end a video conference between a user and one or more other attendees according to an instruction of the user.

In combination with the RF circuit system 108, the touchscreen 112, the display controller 156, the contact module 130, the graphic module 132, and the text input module 134, the email client module 140 includes an executable instruction that is used to create, send, receive, and manage an email in response to an instruction of the user. In combination with the image management module 144, the email client module 140 makes it very easy to create and send an email that includes a still image or a video image shot by the camera module 143.

In combination with the RF circuit system 108, the touchscreen 112, the display controller 156, the contact module 130, the graphic module 132, and the text input module 134, the instant messaging module 141 includes an executable instruction that is used to input a character sequence corresponding to an instant message, modify a previously input character, transmit a corresponding instant message (for example, a call-based instant message that uses a Short Message Service (SMS) protocol or a Multimedia Message Service (MMS) protocol, or an Internet-based instant message that uses XMPP, SIMPLE, or IMPS), receive an instant message, and view a received instant message. In some embodiments, the transmitted and/or received instant message may include a graph, a photo, an audio file, a video file, and/or another attachment supported in an MMS and/or an enhanced message service (EMS). As used in this specification, the "instant message" refers to a call-based message (for example, a message sent by using an SMS or MMS) or an Internet-based message (for example, a message sent by using XMPP, SIMPLE, or IMPS).

In combination with the RF circuit system 108, the touchscreen 112, the display controller 156, the contact module 130, the graphic module 132, the text input module 134, the GPS module 135, the map module 154, and the music player module 146, the exercise support module 142 includes an executable instruction that is used to create an exercise (for example, with a time, a distance, and/or a calorie consumption objective); communicate with the exercise sensor (sports equipment); receive data from the exercise sensor; calibrate a sensor that is used to monitor the exercise; select and play music for the exercise; and display, store, and transmit exercise data.

In combination with the touchscreen 112, the display controller 156, the optical sensor 164, the optical sensor controller 158, the contact module 130, the graphic module 132, the digital image pipeline 161 (which converts original data from the optical sensor into a final image or video), and the image management module 144, the camera module 143 includes an executable instruction that is used to capture a still image or video (including a video stream) and store the still image or video into the memory 102 (for example, in the digital camera film 159), modify a characteristic of the still image or video, or delete a still image or video from the memory 102 (for example, from the digital camera film 159).

In combination with the touchscreen 112, the display controller 156, the contact module 130, the graphic module 132, the text input module 134, and the camera module 143, the image management module 144 includes an executable instruction that is used to permutate, modify (for example, edit), or, by another means, manipulate, label, delete, present (for example, in a digital slide or album), and store a still image and/or a video image (including a still image stored in the camera film 159 and/or a video image).

In combination with the RF circuit system 108, the touchscreen 112, a display system controller 156, the contact module 130, the graphic module 132, and the text input module 134, the browser module 147 includes an executable instruction that is used to browse the Internet (including: searching, linking to, receiving, and displaying a web page or a part of a web page, and linking to an attachment of the web page and another file) according to an instruction of the user.

In combination with the RF circuit system 108, the touchscreen 112, the display system controller 156, the contact module 130, the graphic module 132, the text input module 134, the email client module 140, and the browser module 147, the calendar module 148 includes an executable instruction that is used to create, display, modify, and store a calendar and calendar-related data (for example, a calendar entry and a task list) according to an instruction of the user.

In combination with the RF circuit system 108, the touchscreen 112, the display system controller 156, the contact module 130, the graphic module 132, the text input module 134, and the browser module 147, the desktop applet module 149 is a micro application that can be downloaded and used by a user (for example, a weather desktop applet 149-1, a stock market desktop applet 149-2, a calculator desktop applet 149-3, an alarm clock desktop applet 149-4, and a dictionary desktop applet 149-5), or a micro application created by the user (for example, a desktop applet 149-6 created by the user). In some embodiments, the desktop applets include an HTML (Hypertext Markup Language) file, a CSS (cascading style sheet) file, and a JavaScript file. In some embodiments, the desktop applets include an XML (Extensible Markup Language) file and a JavaScript file (for example, a Yahoo! desktop applet).

In combination with the RF circuit system 108, the touchscreen 112, the display system controller 156, the contact module 130, the graphic module 132, and the text input module 134, and the browser module 147, the desktop applet creator module 150 may be used by the user to create a desktop applet (for example, migrate a user-specified part of the web page into the desktop applet).

In combination with the touchscreen 112, the display system controller 156, the contact module 130, the graphic module 132, and the text input module 134, the search module 151 includes an executable instruction that is used to search, according to an instruction of the user, the memory 102 for a text, music, a sound, an image, a video, and/or another file that matches one or more search criteria (for example, one or more keywords specified by the user).

In combination with the touchscreen 112, the display system controller 156, the contact module 130, the graphic module 132, the audio circuit system 110, the speaker 111, the RF circuit system 108, and the browser module 147, the video and music player module 152 includes an executable instruction that allows the user to download and play back recorded music and another sound file that are stored in one or more file formats (for example, an MP3 or AAC file), and an executable instruction that is used to display, present, and, by another means, play back a video (for example, on the touchscreen 112 or on an external display connected by using the external port 124). In some embodiments, the device 100 may include functionality of an MP3 player.

In combination with the touchscreen 112, the display controller 156, the contact module 130, the graphic module 132, and the text input module 134, the memo module 153 includes an executable instruction that is used to create and manage a memo, a task list, and the like according to an instruction of the user.

In combination with the RF circuit system 108, the touchscreen 112, the display system controller 156, the contact module 130, the graphic module 132, the text input module 134, the GPS module 135, and the browser module 147, the map module 154 may be configured to receive, display, modify, and store a map and map-related data (for example, a driving route; data about a shop at a specific location or a nearby shop, and data about another point of interest; and other location-based data) according to an instruction of the user.

In combination with the touchscreen 112, the display system controller 156, the contact module 130, the graphic module 132, the audio circuit system 110, the speaker 111, the RF circuit system 108, the text input module 134, the email client module 140, and the browser module 147, the online video module 155 includes an instruction that allows the user to access, browse, receive (for example, receive and/or download in a streaming manner), play back (for example, on the touchscreen or on an external display connected by using the external port 124), and send an email that has a link to a specific online video, and, by another means, manage online videos in one or more file formats (for example, H.264). In some embodiments, the link to a specific online video is sent by using the instant messaging module 141 rather than the email client module 140.

In combination with the touchscreen 112, the display system controller 156, the contact module 130, the graphic module 132, the audio circuit system 110, the speaker 111, and the microphone 113, the sound/audio recorder module 163 includes an executable instruction that allows the user to record an audio (for example, a sound) in one or more file formats (for example, an MP3 or AAC file), and an executable instruction that is used to present or, by another means, play back the recorded audio file.

In combination with the touchscreen 112, the display system controller 156, the contact module 130, and the graphic module 132, the notification module 165 includes an executable instruction that is used to display a notification or an alarm (for example, an incoming message, an incoming call, reminding of a calendar event, or an application event) on the touchscreen 112.

Each module or application described above corresponds to a set of executable instructions that are used to execute one or more functions mentioned above and the method described herein (for example, the method implemented by the computer described in this specification, and another information processing method). Such modules (that is, instruction sets) are not necessarily implemented as separate software programs, processes or modules, and therefore various subsets of the modules may be combined in various embodiments or may be rearranged by another means. In some embodiments, the memory 102 may store a subset of the foregoing modules or data structures. In addition, the memory 102 may store another module or another data structure that is not described above.

In some embodiments, the device 100 is such a device that an operation of a set of functions predefined on the device is uniquely executed by using the touchscreen and/or the touchpad. By using the touchscreen and/or the touchpad as a main input control device for operating the device 100, a quantity of physical input control devices (for example, a press button and a dial pad) on the device 100 can be reduced.

The set of predefined functions that can be uniquely executed by using the touchscreen and/or the touchpad include navigation between user interfaces. In some embodiments, when the touchpad is touched by the user, the device 100 is navigated from any user interface displayable on the device 100 to a primary menu, a main menu, or a root menu. In such embodiments, the touchpad may be referred to as a "menu button". In some other embodiments, the menu button may be a physical push button or another physical input control device rather than a touchpad.

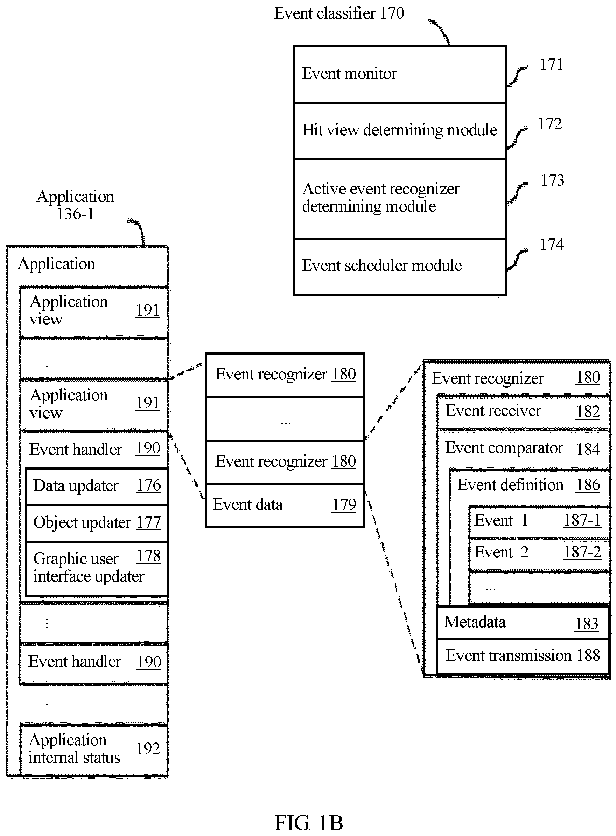

FIG. 1B shows a block diagram of an exemplary component used for event handling according to some embodiments. In some embodiments, the memory 102 (in FIG. 1A-a and FIG. 1A-b) or the memory 370 (in FIG. 3) includes an event classifier 170 (for example, in the operating system 126) and a corresponding application 136-1 (for example, any application in the foregoing applications 137-151, 155, and 380-390).

The event classifier 170 receives event information, and determines an application 136-1 to which the event information is to be transmitted, and an application view 191 of the application 136-1. The event classifier 170 includes an event monitor 171 and an event scheduler module 174. In some embodiments, the application 136-1 includes the application internal status 192. The application internal status 192 indicates a current application view displayed on the touch-sensitive display 112 when the application is active or being executed. In some embodiments, the device/global internal status 157 is used by the event classifier 170 to determine which application/applications is/are currently active, and the application internal status 192 is used by the event classifier 170 to determine an application view 191 to which the event information is to be transmitted.

In some embodiments, the application internal status 192 includes other information such as one or more of the following: restoration information to be used when execution of the application 136-1 is restored, user interface status information that indicates information currently displayed by the application 136-1 or indicates information readily to be displayed by the application 136-1, a status queue that is used to enable the user to return to a previous state or view of the application 136-1, or a redo/undo queue that is used to enable the user to return to a previous action taken by the user.

The event monitor 171 receives the event information from a peripheral device interface 118. The event information includes information about a sub-event (for example, a user touch on the touch-sensitive display 112, which serves as a part of a multi-point touch gesture). The peripheral device interface 118 transmits information received from the I/O subsystem 106 or the sensor (for example, the proximity sensor 166), the accelerometer 168, and/or the microphone 113 (by using the audio circuit system 110). The information received by the peripheral device interface 118 from the I/O subsystem 106 includes information from the touch-sensitive display 112 or the touch-sensitive surface.

In some embodiments, the event monitor 171 sends requests to the peripheral device interface 118 at predetermined intervals. In response, the peripheral device interface 118 transmits the event information. In another embodiment, the peripheral device interface 118 transmits the event information only when a significant event exists (for example, an input higher than a predetermined noise threshold is received, and/or an input that exceeds predetermined duration is received).

In some embodiments, the event classifier 170 further includes a hit view determining module 172 and/or an active event recognizer determining module 173.

When the touch-sensitive display 112 displays more than one view, the hit view determining module 172 provides a software process that is used to determine in which places of one or more views the sub-event has occurred. The view is formed by controls and other components that are visible by the user on the display.

Another aspect of the user interface associated with the application is a set of views, which are sometimes referred to as an application view or a user interface window in this specification. In such views, information is displayed and a touch-based gesture occurs. An application view (of a corresponding application) in which a touch is detected may correspond to a programmed level in a programmed hierarchy or a view hierarchy of the application. For example, a lowest-level view in which a touch is detected may be referred to as a hit view, and an event set recognized as a correct input may be determined at least partly based on a hit view of an initial touch, where the initial touch begins with a touch-based gesture.

The hit view determining module 172 receives information associated with a sub-event of the touch-based gesture. When the application has multiple views that are organized in the hierarchy, the hit view determining module 172 recognizes the view as a lowest view that should handle the sub-event in the hierarchy. In most cases, the hit view is a lowest-level view in which an initiation sub-event (that is, the first sub-event in a sub-event sequence of a generated event or a potential event) occurs. Once the hit view is recognized by the hit view determining module, the hit view generally receives all sub-events associated with a same touch or input source to which the recognized hit view is pertinent.

The active event recognizer determining module 173 determines which view (views) in the view hierarchy should receive a specific sub-event sequence. In some embodiments, the active event recognizer determining module 173 determines that only the hit view should receive a specific sub-event sequence. In another embodiment, the active event recognizer determining module 173 determines that all views that include a physical location of the sub-event are activity-related views, and therefore determines that all activity-related views should receive the specific sub-event sequence. In another embodiment, even if the touch sub-event is completely limited to an area associated with a specific view, a higher view in the hierarchy still remains as an activity-related view.

The event scheduler module 174 schedules the event information to an event recognizer (for example, an event recognizer 180). In an embodiment that includes the active event recognizer determining module 173, the event scheduler module 174 transmits the event information to an event recognizer determined by the active event recognizer determining module 173. In some embodiments, the event scheduler module 174 stores the event information in an event queue, and the event information is retrieved by a corresponding event receiver module 182. In some embodiments, the operating system 126 includes the event classifier 170. Alternatively, the application 136-1 includes the event classifier 170. In another embodiment, the event classifier 170 is an independent module, or is a part of another module (for example, the contact/movement module 130) stored in the memory 102.

In some embodiments, the application 136-1 includes multiple event handlers 190 and one or more application views 191, each of which includes an instruction that is used to handle a touch event, where the touch event occurs in a corresponding view of a user interface of the application. Each application view 191 of the application 136-1 includes one or more event recognizers 180. Generally, the corresponding application view 191 includes multiple event recognizers 180. In another embodiment, one or more of the event recognizers 180 are a part of an independent module. For example, the independent module is a higher-level object from which a user interface toolkit (not shown) or the application 136-1 inherits a method and another characteristic. In some embodiments, the corresponding event handler 190 includes one or more of the following: a data updater 176, an object updater 177, a GUI updater 178, and/or event data 179 received from the event classifier 170. The event handler 190 may use or invoke the data updater 176, the object updater 177, or the GUI updater 178 to update the application internal status 192. Alternatively, one or more of the application views 191 each include one or more corresponding event handlers 190. In addition, in some embodiments, one or more of the data updater 176, the object updater 177, or the GUI updater 178 are included in the corresponding application view 191.

The corresponding event recognizer 180 receives the event information (for example, the event data 179) from the event classifier 170, and identifies an event according to the event information. The event classifier 180 includes an event receiver 182 and an event comparator 184. In some embodiments, the event recognizer 180 further includes at least one subset of the following: metadata 183 and an event transmission instruction 188 (which may include a sub-event transmission instruction).

The event receiver 182 receives the event information from the event classifier 170. The event information includes information about a sub-event, for example, a touch or a touch movement. Depending on the sub-event, the event information further includes other information such as a sub-event location. When the sub-event involves a touch movement, the event information may further include a rate and a direction of the sub-event. In some embodiments, an event includes rotation of a device from one orientation to another orientation (for example, from a portrait orientation to a landscape orientation, or vice versa), and the event information includes corresponding information about a current orientation (also referred to as a device posture) of the device.

The event comparator 184 compares the event information with a predefined event definition or sub-event definition, and based on the comparison, determines an event or sub-event or determines or updates a state of the event or sub-event. In some embodiments, the event comparator 184 includes an event definition 186. The event definition 186 includes a definition of the event (for example, a predefined sub-event sequence), for example, event 1 (187-1), event 2 (187-2) and other information. In some embodiments, the sub-event in the event 187 includes, for example, touch start, touch end, touch movement, touch cancellation, and a multi-point touch. In an instance, the definition of the event 1 (187-1) is to double-tap on a displayed object. For example, the double-tap includes the first touch (touch start) for predetermined duration on the displayed object, the first raise (touch end) for predetermined duration, the second touch (the touch is started) for predetermined duration on the displayed object, and the second raise (the touch ends) for predetermined duration. In another instance, the definition of the event 2(187-2) is to drag on a displayed object. For example, the drag includes a touch (or a contact) on the displayed object for predetermined duration, a movement of the touch on the touch-sensitive display 112, and a raise of the touch (the touch ends). In some embodiments, the event further includes information used in one or more associated event handlers 190.

In some embodiments, the event definition 187 includes a definition of an event applied to a corresponding user interface object. In some embodiments, the event comparator 184 performs a hit test to determine which user interface object is associated with the sub-event. For example, in the application view in which three user interface objects are displayed on the touch display 112, when a touch is detected on the touch-sensitive display 112, the event comparator 184 performs a hit test to determine which of the three user interface objects is associated with the touch (the sub-event). If each displayed object is associated with the event handler 190, the event comparator uses a result of the hit test to determine which event handler 190 should be activated. For example, the event comparator 184 selects an object that triggers the hit test and an event handler associated with the sub-event.

In some embodiments, the definition of the corresponding event 187 further includes a delay action. The delay action delays transmission of the event information until it is determined that the sub-event sequence surely corresponds to or surely does not correspond to an event type of the event recognizer.

When the corresponding event recognizer 180 determines that a sub-event string does not match any event in the event definition 186, the corresponding event recognizer 180 enters an event disabled state, an event failed state, or an event ended state, and then disregards a subsequent sub-event of the touch-based gesture. In this case, another event recognizer (if any) that remains active in the hit view continues tracking and handling an underway sub-event of the touch-based gesture.

In some embodiments, the corresponding event recognizer 180 includes metadata 183 of configurable attributes, flags and/or lists, where the metadata is used to indicate how an event transmission system should perform a transmission action of transmitting the sub-event of the activity-related event recognizer. In some embodiments, the metadata 183 includes configurable attributes, flags and/or lists that indicate how event recognizers can interact with each other. In some embodiments, the metadata 183 includes variable, parallel and configurable attributes, flags and/or lists that indicate whether the sub-event is transmitted to the view or the programmed hierarchy.

In some embodiments, when one or more specific sub-events of an event are recognized, the corresponding event recognizer 180 activates the event handler 190 associated with the event. In some embodiments, the corresponding event recognizer 180 transmits the event information associated with the event to the event handler 190. Activating the event handler 190 is different from sending (and sending in a delayed manner) the sub-event to the corresponding hit view. In some embodiments, the event recognizer 180 sends a flag associated with the recognized event, and the event processing program 190 associated with the flag receives the flag and performs a predefined process.

In some embodiments, the event transmission instruction 188 includes a sub-event transmission instruction of transmitting the event information about the sub-event without activating the event handler. Instead, the sub-event transmission instruction transmits the event information to the event handler associated with the sub-event string or to the activity-related view. The event handler associated with the sub-event string or the activity-related view receives the event information, and performs a predetermined process.

In some embodiments, the data updater 176 creates and updates data used in the application 136-1. For example, the data updater 176 updates a phone number used in the contact person module 137, or a video file used and stored in the video player module 145. In some embodiments, the object updater 176 creates and updates an object used in the application 136-1. For example, the object updater 177 creates a new user interface object, or updates a location of the user interface object. The GUI updater 178 updates the GUI. For example, the GUI updater 178 prepares display information, and sends the display information to the graphic module 132 for being displayed on the touch-sensitive display.

In some embodiments, the event handler 190 includes or has permission to access the data updater 176, the object updater 177, and the GUI updater 178. In some embodiments, the data updater 176, the object updater 177, and the GUI updater 178 are included in a single module of the corresponding application 136-1 or application view 191. In another embodiment, they are included in two or more software modules.

It should be understood that the foregoing discussion about the event handling of the user touch on the touch-sensitive display is also applicable to another form of a user input performed by using an input device to operate the electronic device 100 (not all of the user inputs are initiated on the touchscreen). For example, coordinating a mouse movement and pressing a mouse button (with or without a single or multiple keyboards for pressing or holding), a movement, a tap, a drag, a scroll, and the like performed by the user on the touchpad, a stylus input, a device movement, an oral instruction, a detected eye movement, a biometric feature input, and/or any combination thereof may be used as an input of a sub-event of a corresponding event to be recognized.

FIG. 2 shows a portable electronic device 100 with a touchscreen 112 according to some embodiments. The touchscreen may display one or more graphs on the user interface (UI) 200. In this embodiment and other embodiments described below, the user may use, for example, one or more fingers 202 (not drawn to scale in the accompanying drawing) or one or more styluses 203 (not drawn to scale in the accompanying drawing) to make a gesture on the graphs to select one or more of the graphs. In some embodiments, when the user interrupts the contact with the one or more graphs, selection of the one or more graphs occurs. In some embodiments, the gesture may include one or more taps, one or more flicks (from left to right, from right to left, upward and/or downward) and/or a flip of a finger that already contacts the device 100 (from right to left, from left to right, upward and/or downward). In some embodiments, an unintentional contact with a graph does not select the graph. For example, when the gesture corresponding to the selection is a tap, a sweep gesture that sweeps on an application icon does not cause selection of a corresponding application.

The device 100 may further include one or more physical buttons such as a "main screen" or a menu button 204. As mentioned above, the menu button 204 may be configured to navigate to any application 136 in a group of applications that run on the device 100. Alternatively, in some embodiments, the menu button is implemented as a soft key in a GUI displayed on the touchscreen 112.

In an embodiment, the device 100 includes the touchscreen 112, the menu button 204, and a push button 206 configured to turn on or turn off the device and lock the device, (one or more) volume adjustment buttons 208, a subscriber identity module (SIM) slot 210, a headset jack 212, and an interconnection/charging external port 124. The push button 206 may be configured to turn on or turn off the device by pressing the button and holding the pressed state of the button for a predefined time interval; lock the device by pressing the button and releasing the button before the predefined time interval expires; and/or unlock the device or initiate an unlock process. In an alternative embodiment, the device 100 may receive, by using the microphone 113, a voice input used to activate or deactivate a function.

FIG. 3 is a block diagram of an exemplary electronic device with a display and a touch-sensitive surface according to some embodiments. The device 300 is unnecessarily portable. In some embodiments, the device 300 is a laptop computer, a desktop computer, a tablet, a multimedia player device, a navigation device, an education device (for example, a learning toy for children), a gaming system, or a control device (for example, a home controller or industrial controller). The device 300 generally includes one or more processing units (CPU) 310, one or more network interfaces or other communications interfaces 360, a memory 370, and one or more communications buses 320 used to interconnect the components. In some embodiments, the processing units 310 include an image signal processor and a dual-core or multi-core processor. The communications buses 320 may include a circuit system (sometimes referred to as a chipset) configured to interconnect system components and control communication between the system components. The device 300 includes an input/output (I/O) interface 330 with a display 340, where the display 340 is generally a touchscreen display. The I/O interface 330 may further include a keyboard and/or a mouse (or another pointing device) 350 and a touchpad 355. The device 300 further includes an optical sensor 164 and an optical sensor controller 158. The memory 370 includes a high-speed random access memory such as a DRAM, an SRAM, a DDR, a RAM, or another random access solid-state storage device; and may include a non-volatile memory such as one or more disk storage devices, compact disc storage devices, flash memory devices, or other non-volatile solid-state storage devices. Optionally, the memory 370 may include one or more storage devices that can be located remotely from the CPU 310. In some embodiments, the memory 370 stores a program, a module, and a data structure that are similar to a program, a module, and a data structure stored in the memory 102 of the portable electronic device 100 (FIG. 1), or a subset thereof. In addition, the memory 370 may store another program, module and data structure that do not exist in the memory 102 of the portable electronic device 100. For example, the memory 370 of the device 300 may store a drawing module 380, a presence module 382, a word processing module 384, a web page creation module 386, a disk editing module 388, and/or a spreadsheet module 390, and the memory 102 of the portable electronic device 100 (FIG. 1) may not store such modules.

Each of the recognized components in FIG. 3 may be stored in one or more of the storage devices mentioned above. Each of the recognized modules corresponds to an instruction set that is used to perform the foregoing functions. The recognized modules or programs (that is, instruction sets) are not necessarily implemented as separate software programs, processes or modules, and therefore various subsets of the modules may be combined in various embodiments or may be rearranged by another means. In some embodiments, the memory 370 may store a subset of the foregoing modules and data structures. In addition, the memory 370 may store another module or another data structure that is not described above.

Now attention is paid to an embodiment of a user interface ("UI") that can be implemented on the portable electronic device 100.

FIG. 4A shows an exemplary user interface used for an application menu on a portable electronic device 100 according to some embodiments. Similarly, the user interface may be implemented on the device 300. In some embodiments, the user interface 400 includes the following elements or a subset or superset thereof:
signal strength indicator 402 of wireless communication (for example, for a mobile phone signal and a Wi-Fi signal);
time 404;
Bluetooth indicator 405;
battery status indicator 406;
tray 408 with common application icons, where the common applications are, for example:
   call 138, which may include an indicator 414 that indicates a quantity of missing calls or voice messages;
   email client 140, which may include an indicator 410 that indicates a quantity of new emails;
   browser 147;
   video and music player 152, which is also referred to as an iPod (a trademark of Apple Inc.) module 152; and
   icons of other applications, where the other applications are, for example:
      IM 141;
      image management 144;
      camera 143;
      weather 149-1;
      stock market 149-2;
      exercise support 142;
      calendar 148;
      alarm clock 149-4;
      map 154;
      memo 153;
      setup 412, which provides access to settings of the device 100 and various applications 136; and
      online video module 155, which is also referred to as YouTube (a trademark of Google Inc.) module 155.

In addition, although the following examples are given mainly with reference to finger inputs (for example, a single-finger contact, a single-finger tap gesture, and a single-finger sweep gesture), understandably in some embodiments, one or more of the finger inputs are replaced with inputs (for example, stylus inputs) from another input device.

### User Interface and Associated Processes

Now attention is paid to an embodiment of a user interface ("UI") that can be implemented on an electronic device (for example, the device 300 or the portable electronic device 100) with a display and a touch-sensitive surface, and an embodiment of associated processes.

FIGs. 5A-5G show an exemplary user interface used to automatically gather application interface elements (for example, application icons) according to some embodiments. The user interface in such accompanying drawings is used to expound processes and/or functions described below, including processes and/or functions in FIG. 6 and FIG. 7.

FIG. 5A shows a device interface displayed on the touchscreen 112 of the device 100.

The device interface displays application icons 501-503 corresponding to multiple applications. The applications corresponding to the application icons 501A-501D are applications of a same type. The applications corresponding to the application icons 501A-501D and the application corresponding to the application icon 503 are applications of different types. An example in which the applications corresponding to the application icons 501A-501D are video-type applications and the application corresponding to the application icon 503 is a game-type application is used for the following discussion.

It should be emphasized that in this specification, a rule for determining whether applications are applications of a same type, that is, a classification rule of the applications, is flexible. The classification rule may be preset before delivery of the device, or customized by the user and updated by using the network, or in a manner that is a combination thereof. The classification rule may be enabled by default, enabled as triggered by the user regularly (for example, periodically) or irregularly (for example, randomly), enabled as triggered by a network instruction, or enabled in a manner that is a combination thereof. The applications of the same type include but are not limited to one of the following or any combination thereof:
applications that come from a same or similar source (for example, two applications are applications installed before delivery from a factory, two applications are applications downloaded from a same or similar app store, or two applications are applications developed by a same or similar developer);
applications that serve a same or similar purpose (for example, two applications are video-type applications, two applications are fitness-type applications, or two applications are finance-type applications);
applications identified as a same or similar type (for example, two applications are identified as game-type applications on the app store, applications downloaded for a maximum quantity of times, applications downloaded for a maximum quantity of times in a period, or applications downloaded for a maximum quantity of times in a geographic area);
applications with a same or similar use habit of users (for example, two applications are applications used by users for a quantity of times that falls in a specific range (for example, more than 1000 times), two applications are applications used or frequently used by users in a specific period (for example, for more than 50 times in the last month), two applications are applications used or frequently used by users in a specific geographic area, or two applications are applications accessed by users by using the same registration information).

In this specification, unless otherwise specified, a user gesture mentioned is flexible, and may be a tap, a double-tap, circling, line drawing, a single-finger touch, a multi-finger touch, or the like. A person of ordinary skill in the art can understand that selection of a specific gesture is flexible, provided that a basically same effect is achieved. In this specification, unless otherwise specified, a location or an area of a user gesture actuated on the touch-sensitive surface is also flexible, and may be an area of an application interface element displayed on the screen or a nearby area, a blank area in which no application interface element is displayed on the screen, an area that is set by a function displayed on the screen, or the like. A person of ordinary skill in the art can understand that a specific location or area in which a gesture is actuated on the touch-sensitive surface is flexibly settable, provided that a basically same effect is achieved.

The following gives an unrestrictive discussion by using a single-finger press application icon 501A of a user as an example.

The gesture 505 may be detected on the touch-sensitive surface of the touchscreen 112. The device 100 responds to the gesture 505 so that the application icons 501A-501D are movable. The application icon 503 may not respond to the gesture 505.

In some embodiments, by detecting a pressure, duration, an area, or a location of actuating the gesture on the touch-sensitive surface, or a distance between the gesture and an application icon or some application icons, or a distance between the gesture and a boundary of the touch-sensitive surface, the device 100 may determine that an intention of the gesture is to instruct the device to perform an operation on the application icon, for example, editing, moving, or gathered management, so as to respond to the gesture.

In some embodiments, the device may notify the user explicitly or implicitly: The application icons 501A-501D are movable. For example, a shaking icon is used to notify the user that the icon is editable, or that the icon is activated, or that the icon is movable to an application interface element tray.

In some embodiments, the device may inform the user explicitly or implicitly: The application icon 503 does not respond to the gesture 505.

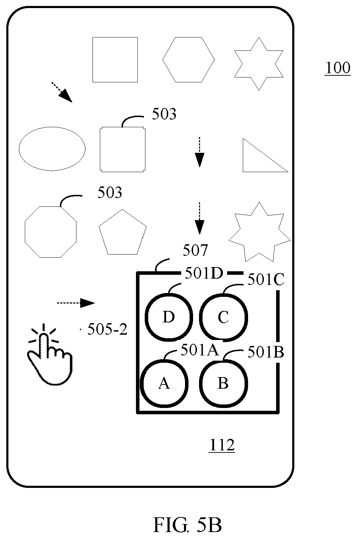

Subsequently, the device interface shifts to FIG. 5B, in which the application interface elements corresponding to the applications of a same type (for example, video-type applications) are automatically gathered into a new folder created on the device interface. Another application of another type (for example, a game-type application) is not moved.

According some further, unclaimed, aspects, the device 100 responds to the gesture 505 to trigger the following events: displaying a new folder 507 on the device interface, automatically moving the application icons 501A-501D into the folder 507, and the like. In the discussion in this specification, unless otherwise specified, event occurrence is not order-sensitive. For example, an event order according to those unclaimed aspects may be: first displaying automatic movement of the application icons 501A-501D into an area, and then displaying a folder in this area; or may be: first displaying a folder in an area, and then displaying automatic movement of the application icons 501A-501D into the folder.

In some embodiments, the device 100 may trigger the following events after waiting for the user to further provide another gesture 505-2: displaying a new folder 507 on the device interface, and automatically moving the application icons 501A-501D into the folder 507. As mentioned above, the form of the gesture 505-2 is flexible, for example, tapping, and flicking; and the location or area in which the gesture 505-2 is actuated on the touch-sensitive surface is also flexible, for example, the location may be the same as or different from a location in which the gesture 505 is actuated on the touch-sensitive surface; and the event occurrence order is also flexible.

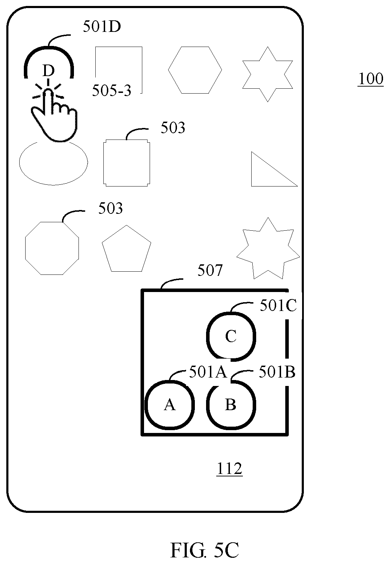

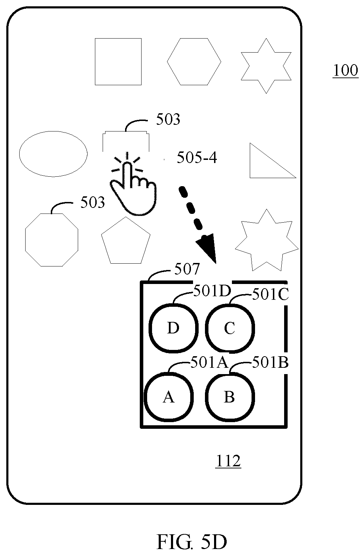

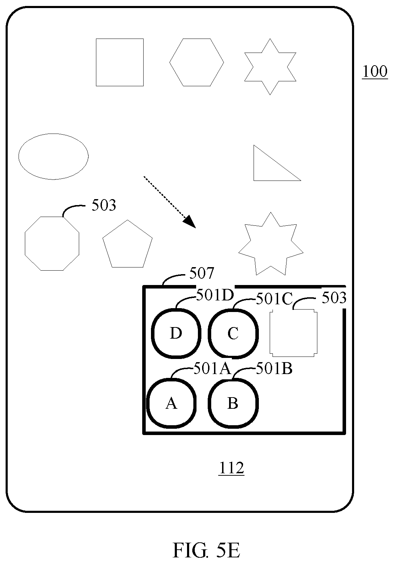

In some embodiments, the device may respond to a personalized management requirement of the user. For example, the device interface shifts to FIG. 5C, that is, the device provides a personalized selection opportunity, and waits for the user to deselect (de-select) the application icon 501D, before the automatic movement of the application icons 501A-501D, by using a gesture 505-3 and then triggers an automatic movement of the icon. Then when the device responds to the user gesture and triggers application icons of a same type to be automatically gathered into the folder 507, the icon 501D is not moved into the folder 507. For another example, the device interface shifts to FIG. 5D, that is, the device provides a personalized selection opportunity, and waits for the user to select the application icon 503 (for example, an application icon of a different type than the application corresponding to the icon 501A), before the automatic movement of the application icons 501A-501D, by using a gesture 505-3 and then triggers an automatic movement of the icon. Then when the device responds to the user gesture and triggers application icons of a same type to be automatically gathered into the folder 507, the icon 503 is also moved into the folder 507 (FIG. 5E). It can be learned that although the game-type application corresponding to the icon 503 is not the same as the video-type application corresponding to the icon 501, more personalized choices are provided for the user, and therefore the device can provide a more efficient interaction interface, reduce user operation frequency, reduce power consumption, and improve user experience.

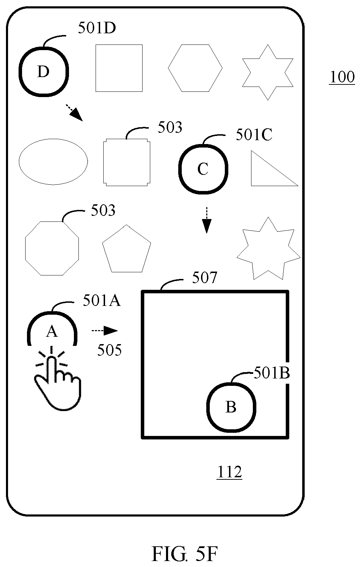

According to some further, unclaimed, aspects, the folder 507 (FIG. 5F) already exists on the device interface. When responding to the user gesture and performing gathered management on application icons of a same type, the device causes the icons 501A, 501D, and 501C outside the folder 507 to be movable because the device determines that the applications corresponding to the icons 501A, 501D, and 501C are the same type of applications as the application corresponding to the icon 501B in the folder 507. Except (except) the new folder created on the device interface, the foregoing discussion about FIG. 5A-5E is applicable to a scenario in which a folder already exists on the device interface. For example, the icons 501A, 501D, and 501C are automatically gathered into the folder 507, an application icon is deselected or selected, and the like.

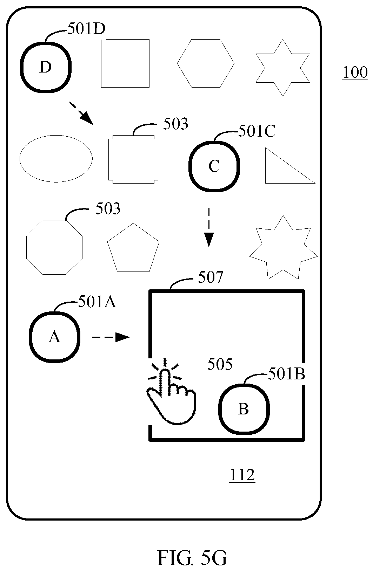

In the embodiments of the claimed invention, the folder 507 already exists on the device interface. When the device responds to the user gesture and performs gathered management on the application icons of a same type, the user gesture is actuated in a location or area (FIG. 5G) of the folder 507. The device causes the icons 501A, 501D, and 501C outside the folder 507 to be movable because the device determines that the applications corresponding to the icons 501A, 501D, and 501C are the same type of applications as the application corresponding to the icon 501B in the folder 507.

The foregoing discussion about FIGs. 5A-5F is applicable to a scenario in which a folder already exists on the device interface. For example, the icons 501A, 501D, and 501C are automatically gathered into the folder 507, an application icon is deselected or selected, and the like.

FIG. 6 shows a flowchart of a method 600 for moving an application interface element according to some further, unclaimed, aspects. The method 600 is executed on a portable electronic device (for example, the device 300 in FIG. 3, or the portable electronic device 100 in FIG. 1) with a display, a touch-sensitive surface, and multiple applications (including a camera application). According to those unclaimed aspects, the display is a touchscreen display, and the touch-sensitive surface is on the display. According to those unclaimed aspects, the display is separated from the touch-sensitive surface. Some operations in the method 600 may be combined, and/or order of some operations is changeable.

As described below, the method 600 provides a more efficient manner for quickly moving an application interface element. The method helps a user gather application interface elements on a graphic user interface by performing a few operations, reduces manual operations of the user, saves electric power, and enhances user experience.

When the graphic user interface is in editable mode, the portable electronic device detects a first gesture (602) actuated on an icon X (an application icon or a folder icon) on a user interface. The device determines (603) an intention of the first gesture. The first gesture may be a user-defined gesture, for example, an operation gesture such as a double-tap or circling. The determining may be: determining whether a touch time, a touch location, or a pressure strength exceeds a defined threshold, for example, determining whether the pressure strength threshold is greater than a strength value for activating a single icon, determining whether the touch time is greater than a touch time value for activating a single icon, whether the touch location is less than a distance between two icons on the desktop, or the like. If the determining result is no, the device determines that an intention of the first gesture is only to activate an application corresponding to the icon X, or open a folder corresponding to the icon X. Then the device performs a corresponding action such as activating the icon (604). If the determining result is yes, the device determines that an intention of the first gesture is to automatically gather an application icon with the same type as the application corresponding to the icon X (if the icon X is a folder icon, the application corresponding to the application icon in the folder) into a same folder. Then the device activates an icon (605) corresponding to an application of the same type. Optionally, the device may continue to wait for a further management action (606) of the user, for example, deleting one or more activated icons, or adding one or more deactivated icons. Subsequently, the device detects a second gesture of the user (for example, an operation such as activating any icon by means of a touch) (607). Icons of a same type are automatically gathered into a same folder (609). Optionally, the device may further wait for a user operation of naming the folder (609).

According to those unclaimed aspects, the determining (603) in the method 600 may be: determining whether the touch time of the user gesture on the icon exceeds a first threshold, and/or whether the touch location exceeds a defined range threshold. A setting of the first threshold may be slightly greater than a value for activating a single icon. For example, if the value for activating a single icon is 2s, the first threshold may be set to 3.5s. The range threshold of the touch location may be defined as a distance between two icons. For example, if the distance between two icons is 10 pixels, the range threshold is 10 pixels.

According to those unclaimed aspects, the type of the application may be determined according to a "type" label of the application in an app store. For example, if an application Y in the app store is classified as Game, the type of the application Y is: Game.

According to those unclaimed aspects, when the device is unaware of type information of the application Y, the type information may be inferred according to the name of the application. For example, if the name of Y is **Golf, it can be inferred that Y is a Game-type application.

According to those unclaimed aspects, when the device is unaware of type information of the application Y, the type of the application may be obtained or inferred by searching on the connected Internet.

According to those unclaimed aspects, the determining (603) in the method 600 may be: determining whether the touch pressure strength of the user gesture on the icon exceeds a preset pressure strength threshold.

According to those unclaimed aspects, the device needs to wait until the time of actuating the second gesture on the touch-sensitive surface exceeds a preset time threshold, before triggering automatic gathering (608) of the icon.

According to those unclaimed aspects, the device needs to wait until the pressure strength of actuating the second gesture on the touch-sensitive surface exceeds a preset pressure strength value, before triggering automatic gathering (608) of the icon.

According to those unclaimed aspects, the device detects that the first gesture and the second gesture of the user are actuated in a same location or area of the touch-sensitive surface.

According to those unclaimed aspects, the device detects that the first gesture and the second gesture of the user are actuated on a same application interface element (for example, an application icon or a folder icon).

According to those unclaimed aspects, when the folder is a new folder, the device may display the new folder in the location or area of the icon X, or display the new folder in the location or area of the first gesture or the second gesture.

According to those unclaimed aspects, when the folder is an existing folder, before, during or after an automatic gathering process of the icon, the location of the folder on the screen may be variable or invariable.

According to those unclaimed aspects, when the device downloads an application from the app store, a download package of the application carries a type label. When installing the application after completion of downloading, the device queries whether a folder with a same type label (for example, an application in a folder and the newly downloaded application are of a same type) exists on a local desktop of the device. If a determining result is "yes", the device automatically sets a save path of the application on the desktop to the folder. Then, after the newly downloaded application is installed, the icon of the application is displayed in the folder.

It should be understood that the gestures mentioned in all the embodiments in this specification include but are not limited to: a single-finger flick gesture, a continuous movement of a single finger in a predefined direction, a continuous movement of a single finger along any expected path, a single-finger tap gesture, or the like.

It should be understood that a database (for example, a content provider in an Android system) may be set in a software module (for example, stored in the memory 102) of the device. The database may store three types of objects or application interface elements that can be placed on the desktop, including an application shortcut, an application widget, and a folder. The objects in the database are saved in a tree-like manner. For example, when the three types of objects, that is, the application shortcut, the folder, and the application widget are presented directly on the graphic user interface, it indicates that the objects are on a main trunk (or a main node) of the database.

It should be understood that if the application shortcut is saved in the folder, an implementation manner in the device may be: The object corresponding to the application shortcut is saved under the trunk (or the node) of the folder object. Likewise, to enable the application shortcut, the folder needs to be first accessed, and then the application shortcut is tapped again to access the application.

It should be understood that displaying a folder icon on the screen, as mentioned in this specification, may be:
creating, by the device, a folder object in the database, and then displaying a corresponding object icon on the desktop of the device.

It should be understood that, when a folder presented by the device to the user on the screen, the device may first search the database to find a node in which the folder object is located, and present application shortcut data objects under the node. If the device detects a gesture for touching an application shortcut icon in the folder, the device responds to the gesture to open an application corresponding to the application shortcut under the folder object. According to some embodiments, FIG. 7 shows a functional block diagram of an electronic device 700 that is configured according to a principle of the present invention. Function blocks of the device may be implemented by hardware, software, or a combination thereof to execute the principle of the present invention. A person skilled in the art can understand that the function blocks mentioned in FIG. 7 may be combined or separated into subblocks to implement the principle of the present invention. Therefore, the description in this specification can support any possible combinations or separations of the function blocks mentioned herein, or further limitations.

As shown in FIG. 7, the electronic device 700 includes: a touch-sensitive display unit 702, where the touch-sensitive display unit 702 is configured to display a screen interface and configured to receive a gesture; and a processing unit 703, where the processing unit 703 is coupled to the touch-sensitive display unit 702. In some embodiments, the processing unit includes a touchscreen receiving unit 704, an action interpretation unit 705, an event distribution unit 706, a main screen receiving unit 707, an event detection unit 708, an icon activation unit 709, an icon management unit 710, and a folder management unit 711.

The following describes functions of the electronic device 700. A person of ordinary skill in the art can understand that the following functions correspond to embodiments of the electronic device, the system, the apparatus, the method, the graphic user interface, the information processing apparatus (for example, a processor chip or a processor chipset), and the computer-readable storage medium described in this specification, and a combination thereof and/or various combinations thereof can be directly and unambiguously learned by a person of ordinary skill in the art after the person understands this specification.

Touchscreen receiving unit 704: A touch-sensitive display receives an operation signal of a user gesture that touches a screen, where the operation may include actions such as tapping, moving, and raising.

Action interpretation unit 705: This unit is configured to interpret an original action, such as tapping, moving, and raising, into an event such as click, touch and hold, and drag.

Event distribution unit 706: transmits an event in the system action interpretation unit to an upper-layer application (for example, a main screen receiving unit).

Main screen receiving unit 707: The main screen receives the event, delivers the event into the following processing unit corresponding to the event, and performs a process corresponding to the event.

Event detection unit 708: detects a current event, and starts a corresponding processing unit according to the event, for example, detects that the current event is a touch and hold event (functions of the following units are described by using the touch and hold event as an example).

Icon activation unit 709: triggers and activates, according to the touch and hold event, icons corresponding to applications of a same type on the main screen. The activated icon may include an application icon on the main screen, and may further include the icon corresponding to the application of a same type in the folder. A specific implementation of the activation process may be: searching the database of the main screen for data of application icons of a same type, placing them into a temporary folder, or affixing an operable flag to the data of the application icons of the same type to facilitate a subsequent management operation. Finally, forms of the activated application icons may be displayed on the screen as different visual effects.

Icon management unit 710: If the data of the activated icons is saved in the temporary folder of the database, the data of the icons may be managed by deleting or adding; and if the data of the activated icons is identified by using an operable flag, deletion or addition may be performed by modifying the operable flag.

Folder management unit: If no folder corresponding to this type exists in the database of the main screen, a folder is first created in the database, so that the data of the activated icons is moved into the folder. If a folder corresponding to this type already exists in the database of the main screen, the data in the temporary folder in the foregoing unit or the flagged application icons of the same type are moved into the existing folder. In addition, the main interface displays an animation effect of moving the icons into the folder. Finally, if the event ends, the current updated database is saved, and icon locations on the main interface are updated.

It should be understood that a person of ordinary skill in the art can learn, by understanding this specification, that the operations described with reference to FIG. 6 and FIG. 7 may be implemented by the components shown in FIGs. 1A-1B. For example, the event monitor 171 in the event classifier 170 detects a contact on the touch-sensitive display 112, and the event scheduler module 174 transmits the event information to the application 136-1. The corresponding event recognizer 180 of the application 136-1 compares the event information with the corresponding event definition 186, and determines whether the first contact at the first location on the touch-sensitive surface corresponds to the predefined event or sub-event, for example, selection of an object on the user interface. When the corresponding predefined event or sub-event is detected, the event recognizer 180 activates the event handler 190 associated with the detected event or sub-event. The event handler 190 may use or invoke the data updater 176 or the object updater 177 to update the application internal status 192. In some embodiments, the event handler 190 accesses the corresponding GUI updater 178 to update content displayed by the application. Similarly, a person skilled in the art clearly understands how to implement another process based on the components shown in FIGs. 1A-1B.

## Claims

1. A method, applied to a portable electronic device that comprises a display and multiple applications, wherein the display comprises a touch-sensitive surface and a screen, and the method comprises:
displaying a plurality of application interface elements (501A, 501C, 501D, 503) corresponding to a plurality of applications, wherein each of the plurality of application interface elements corresponds to an application, wherein a first plurality of applications corresponding a first plurality of the application interface elements (501A, 501C, 501D) are applications of the same type different to an application corresponding a third application interface element (503) among the application interface elements;
displaying a folder (507) including a second application interface element (501B) corresponding to a second application belonging to the same type of the first plurality of application interface elements (501A, 501C, 501D), wherein the first plurality of application interface elements (501A, 501C, 501D) are not included in the folder (507);
detecting, after the displaying the first plurality of the application interface elements (501A, 501C, 501D), the third application interface element (503), the second application interface element (501B) and the folder (507), a first gesture (505) on the touch-sensitive surface in a screen area of the folder (507);
responding to the first gesture (505) so that the first plurality of the application interface elements (501A, 501C, 501D) are movable because the device determines that the first plurality of applications corresponding to the first plurality of the application interface elements (501A, 501C, 501D) are the same type of applications as the application corresponding to the second application interface element (501B) in the folder (507);
waiting, after actuating the first gesture (505) on the touch-sensitive surface, for the user to select or deselect one or more application interface elements (501A, 501C, 501D, 503) to be movable or unmovable, respectively, wherein when detecting a second gesture (505-3) in an area of the touch-sensitive surface corresponding to the first plurality of the application interface elements (501A, 501C, 501D), responding to the second gesture so that an application interface element (501D) of the first plurality of the application interface elements (501A, 501C, 501D) is not movable, and when detecting a third gesture (505-4) in an area of the touch-sensitive surface corresponding to the third application interface element (503), responding to the third gesture so that the third application interface element (503) is movable;
detecting, after actuating the first gesture (505), a fourth gesture (505-2); and
responding to the fourth gesture (505-2) by automatically moving, into the displayed folder (507), the automatically movable application interface elements to the area corresponding to the folder (507), so that the automatically movable application interface elements are displayed in the folder (507).

2. The method according to claim l, further comprising:
notifying a user explicitly or implicitly: the plurality of application interface elements (501A, 501C, 501D) and the third application interface element (503) are movable.

3. The method according to any of foregoing claims, wherein the plurality of application interface elements (501A, 501C, 501D) and the third application interface element (503) each is an application icon, an application shortcut, an application button, or an application widget.

4. The method according to any of foregoing claims, wherein the first gesture (505) is a touch and hold gesture.

5. A portable electronic device, comprising:
a display, wherein the display comprises a touch-sensitive surface and a screen, one or more processors. a memory; multiple applications, and one or more programs, wherein the one or more programs are stored in the memory and are configured to be executed by the one or more processors, and the one or more programs comprise instructions which when the programs are executed by the one or more processors, to perform the method according to any one of claims 1 to 4.

## Patentansprüche

1. Verfahren, das auf eine tragbare elektronische Vorrichtung angewendet wird, die eine Anzeige und mehrere Anwendungen umfasst, wobei die Anzeige eine berührungsempfindliche Oberfläche und einen Bildschirm umfasst, und das Verfahren umfasst:
Anzeigen einer Vielzahl von Anwendungsschnittstellenelementen (501A, 501C, 501D, 503), die einer Vielzahl von Anwendungen entsprechen, wobei jedes der Vielzahl von Anwendungsschnittstellenelementen einer Anwendung entspricht, wobei eine erste Vielzahl von Anwendungen, die einer ersten Vielzahl der Anwendungsschnittstellenelemente (501A, 501C, 501D) entsprechen, Anwendungen des gleichen Typs sind, die sich von einer Anwendung unterscheiden, die einem dritten Anwendungsschnittstellenelement (503) unter den Anwendungsschnittstellenelementen entspricht;
Anzeigen eines Ordners (507), der ein zweites Anwendungsschnittstellenelement (501B) enthält, das einer zweiten Anwendung entspricht, die zu dem gleichen Typ der ersten Vielzahl von Anwendungsschnittstellenelementen (501A, 501C, 501D) gehört, wobei die erste Vielzahl von Anwendungsschnittstellenelementen (501A, 501C, 501D) nicht in dem Ordner (507) enthalten sind;
Erfassen einer ersten Geste (505) auf der berührungsempfindlichen Oberfläche in einem Bildschirmbereich des Ordners (507) nach dem Anzeigen der ersten Vielzahl der Anwendungsschnittstellenelemente (501A, 501C, 501D), des dritten Anwendungsschnittstellenelements (503), des zweiten Anwendungsschnittstellenelements (501B) und des Ordners (507);
Reagieren auf die erste Geste (505), so dass die erste Vielzahl der Anwendungsschnittstellenelemente (501A, 501C, 501D) bewegbar sind, weil die Vorrichtung feststellt, dass die erste Vielzahl von Anwendungen, die der ersten Vielzahl der Anwendungsschnittstellenelemente (501A, 501C, 501D) entsprechen, der gleiche Typ von Anwendungen sind wie die Anwendung, die dem zweiten Anwendungsschnittstellenelement (501B) in dem Ordner (507) entspricht;
nach dem Ausführen der ersten Geste (505) auf der berührungsempfindlichen Oberfläche, Warten darauf, dass der Benutzer ein oder mehrere Anwendungsschnittstellenelemente (501A, 501C, 501D, 503) auswählt oder abwählt, damit sie bewegbar bzw. nicht bewegbar sind, wobei, wenn eine zweite Geste (505-3) in einem Bereich der berührungsempfindlichen Oberfläche, der der ersten Vielzahl der Anwendungsschnittstellenelemente (501A, 501C, 501D) entspricht, erfasst wird, auf die zweite Geste reagiert wird, so dass ein Anwendungsschnittstellenelement (501D) der ersten Vielzahl der Anwendungsschnittstellenelemente (501A, 501C, 501D) nicht bewegbar ist, und wenn eine dritte Geste (505-4) in einem Bereich der berührungsempfindlichen Oberfläche, der dem dritten Anwendungsschnittstellenelement (503) entspricht, erfasst wird, auf die dritte Geste reagiert wird, so dass das dritte Anwendungsschnittstellenelement (503) bewegbar ist;
Erfassen einer vierten Geste (505-2) nach dem Ausführen der ersten Geste (505); und
Reagieren auf die vierte Geste (505-2) durch automatisches Bewegen der automatisch bewegbaren Anwendungsschnittstellenelemente in den angezeigten Ordner (507) zu dem Bereich, der dem Ordner (507) entspricht, so dass die automatisch bewegbaren Anwendungsschnittstellenelemente in dem Ordner (507) angezeigt werden.

2. Verfahren nach Anspruch 1, ferner umfassend:
Benachrichtigen eines Benutzers explizit oder implizit: die Vielzahl von Anwendungsschnittstellenelementen (501A, 501C, 501D) und das dritte Anwendungsschnittstellenelement (503) sind bewegbar.

3. Verfahren nach einem der vorstehenden Ansprüche, wobei die Vielzahl von Anwendungsschnittstellenelementen (501A, 501C, 501D) und das dritte Anwendungsschnittstellenelement (503) jeweils ein Anwendungssymbol, eine Anwendungsverknüpfung, eine Anwendungsschaltfläche oder ein Anwendungswidget sind.

4. Verfahren nach einem der vorstehenden Ansprüche, wobei die erste Geste (505) eine Berührungs- und Haltegeste ist.

5. Tragbare elektronische Vorrichtung, umfassend:
eine Anzeige, wobei die Anzeige eine berührungsempfindliche Oberfläche und einen Bildschirm umfasst, einen oder mehrere Prozessoren, einen Speicher, mehrere Anwendungen und ein oder mehrere Programme, wobei das eine oder die mehreren Programme in dem Speicher gespeichert sind und so konfiguriert sind, dass sie von dem einen oder den mehreren Prozessoren ausgeführt werden, und das eine oder die mehreren Programme Anweisungen umfassen, die, wenn die Programme von dem einen oder den mehreren Prozessoren ausgeführt werden, das Verfahren nach einem der Ansprüche 1 bis 4 durchführen.

## Revendications

1. Procédé, appliqué à un dispositif électronique portable qui comprend un afficheur et des applications multiples, dans lequel l'afficheur comprend une surface tactile et un écran, et le procédé comprend :
l'affichage d'une pluralité d'éléments d'interface d'application (501A, 501C, 501D, 503) correspondant à un pluralité d'applications, dans lequel chacun de la pluralité d'éléments d'interface d'application correspond à une application, dans lequel une première pluralité d'applications correspondant à une première pluralité des éléments d'interface d'application (501A, 501C, 501D) sont des applications du même type différent d'une application correspondant à un troisième élément d'interface d'application (503) parmi les éléments d'interface d'application;
l'affichage d'un dossier (507) incluant un deuxième élément d'interface d'application (501B) correspondant à une seconde application relevant du même type que la première pluralité d'éléments d'interface d'application (501A, 501C, 501D), dans lequel la première pluralité d'éléments d'interface d'application (501A, 501C, 501D) ne sont pas inclus dans le dossier (507);
la détection, après l'affichage de la première pluralité des éléments d'interface d'application (501A, 501C, 501D), du troisième élément d'interface d'application (503), du deuxième élément d'interface d'application (501B) et du dossier (507), d'un premier geste (505) sur la surface tactile dans une zone d'écran du dossier (507);
le fait de répondre au premier geste (505) de manière à ce que la première pluralité des éléments d'interface d'application (501A, 501C, 501D) soient déplaçables parce que le dispositif a déterminé que la première pluralité d'applications correspondant à la première pluralité des éléments d'interface d'application (501A, 501C, 501D) sont du même type d'applications que l'application correspondant au deuxième élément d'interface d'application (501B) dans le dossier (507);
le fait d'attendre, après avoir effectué le premier geste (505) sur la surface tactile, que l'utilisateur sélectionne ou désélectionne un ou plusieurs éléments d'interface d'application (501A, 501C, 501D, 503) pour être déplaçables ou non déplaçables, respectivement, dans lequel lorsqu'il y a détection d'un deuxième geste (505-3) dans une zone de la surface tactile correspondant à la première pluralité des éléments d'interface d'application (501A, 501C, 501D), le fait de répondre au deuxième geste de manière à ce qu'un élément d'interface d'application (501D) de la pluralité des éléments d'interface d'application (501A, 501C, 501D) ne soit pas déplaçable, et lorsqu'il y a détection d'un troisième geste (505-4) dans une zone de la surface tactile correspondant au troisième élément d'interface d'application (503), le fait de répondre au troisième geste de manière à ce que le troisième élément d'interface d'application (503) soit déplaçable;
la détection, après avoir effectué le premier geste (505), d'un quatrième geste (505-2); et
le fait de répondre au quatrième geste (505-2) en déplaçant automatiquement, jusque dans le dossier (507) affiché, les éléments d'interface d'application automatiquement déplaçables vers la zone correspondant au dossier (507), de sorte que les éléments d'interface d'application automatiquement déplaçables soient affichés dans le dossier (507).

2. Procédé selon la revendication 1, comprenant en outre :
la notification d'un utilisateur explicitement ou implicitement : la pluralité d'éléments d'interface d'application (501A, 501C, 501D) et le troisième élément d'interface d'application (503) sont déplaçables.

3. Procédé selon l'une quelconque des revendications précédentes, dans lequel la pluralité d'éléments d'interface d'application (501A, 501C, 501D) et le troisième élément d'interface d'application (503) sont chacun une icône d'application, un raccourci d'application, un bouton d'application ou un gadget logiciel d'application.

4. Procédé selon l'une quelconque des revendications précédentes, dans lequel le premier geste (505) est un geste de toucher et maintenir.

5. Dispositif électronique portable, comprenant :
un afficheur, dans lequel l'afficheur comprend une surface tactile et un écran, un ou plusieurs processeurs, une mémoire; des applications multiples, et un ou plusieurs programmes, dans lequel les un ou plusieurs programmes sont stockés dans la mémoire et sont configurés pour être exécutés par les un ou plusieurs processeurs, et les un ou plusieurs programmes comprennent des instructions qui, lorsque les programmes sont exécutés par les un ou plusieurs processeurs, pour réaliser le procédé selon l'une quelconque des revendications 1 à 4.
